Europäisches Patentamt

(19) **European Patent Office**

**Office européen des brevets**

(11) Publication number: **0 120 675**
**A1**

# (12) EUROPEAN PATENT APPLICATION

(21) Application number: **84301912.6**

(22) Date of filing: **21.03.84**

(51) Int. Cl.³: **B 23 K 35/30**
**B 23 K 9/00, B 23 K 9/16**
**B 23 K 9/18**

(30) Priority: **24.03.83 US 478232**

(43) Date of publication of application:
**03.10.84 Bulletin 84/40**

(84) Designated Contracting States:
**BE CH DE FR GB IT LI NL SE**

(71) Applicant: **HUNTINGTON ALLOYS, INC.**

**Huntington West Virginia 25720(US)**

(72) Inventor: **Bishel, Robert Anthony**
**118 Willoughby Avenue**
**Huntington West Virginia 25705(US)**

(72) Inventor: **Conaway, Harold Raymond**
**10 Stratford Way**
**Huntington West Virginia 25705(US)**

(74) Representative: **Lockwood, Barbara Ann et al,**
**Thames House (Fifth Floor) Millbank**
**London SW1P 4QF(GB)**

(54) Nickel-iron welding alloy.

(57) A welding wire for use in welding cast irons is disclosed which consists of a nickel-iron alloy containing from 4.9 to 15% manganese. This wire is shown to produce sound crack-resistant welds of good strength.

EP 0 120 675 A1

Croydon Printing Company Ltd

Nickel-iron welding alloy

The present invention relates to a nickel-iron welding alloy for use as a welding wire in welding cast irons and other metal alloys, in particular nickel-iron alloys.

Manufacturers of welding products have for many years tried to develop a welding wire specifically intended for welding cast iron. By welding wire as used herein is meant an alloy in wire or strip form which may be used as a core for coated electrodes, a strip from which a sheath for cored electrodes is produced, strip for submerged arc welding (SAW) or wire for gas metal arc welding (GMAW or MIG) or for gas tungsten arc welding (GTAW or TIG). Such wires may be for use in single or multipass welding techniques. In the welding of cast iron, the welding wire must have good mechanical properties, must tolerate dilution, be applicable to GTAW (TIG), GMAW (MIG) pulsed arc welding, spray welding and SAW processes, be crack resistant and exhibit good wetting characteristics. It must also lend itself to the production of electrodes for semi automatic and fully automatic robotics.

Amongst many earlier attempts to develop welding alloys and welding products for welding cast iron and nickel-iron based alloys the following are of note: UK patent 995 069 relating to a nickel-iron welding material having a low coefficient of expansion; UK patent 1 154 269 relating to a nickel-iron welding alloy having a flux coating intended for welding austenitic ductile iron; US patent 3 644 144 relating to a coated nickel-iron welding electrode and UK patents 1 397 685 and 1 494 489 relating to flux-cored welding electrodes for welding cast iron. The latter patents cover electrodes which have become commercially available as NI-ROD 55 (NI-ROD is a Trade Mark of the Inco group of companies) and use as the sheath material a 55/45 nickel

- 2 -

0120675

iron alloy.   This material however is crack sensitive and cannot be used in situations where strength is critical.

The present invention is based on the development of a nickel-iron alloy for use as welding wire, as hereinbefore defined, which gives sound weld deposits when used in the welding of cast iron and nickel iron alloys.

According to the present invention there is provided a welding wire for use in welding cast iron or nickel-iron alloys consisting of up to 0.3% carbon, 4.9 to 15% manganese, 36 to 60% nickel, up to 1% silicon, up to 4% copper, the balance apart from impurities being iron in the range 36 to 60%.   Preferably the welding wire has a composition in the range 0.1 to 0.3% carbon, 7 to 12% manganese, up to 0.2% silicon, 41 to 44% nickel, the balance apart from impurities being iron. A particularly useful welding wire has the nominal composition 0.3% carbon, 11.4% manganese, 0.11% silicon, 41.2% nickel balance iron.   This alloy was used to weld ductile iron and the all weld metal properties were found to be as follows:-

| Wire diameter (cm) | 0.16 | 0.11 |
| Yield strength $MN/m^2$ | 443 | 458 |
| Tensile strength $MN/m^2$ | 687 | 697 |
| % Elongation | 34 | 28 |
| % RA | 38 | 34 |
| Hardness Rb | 92 | 92 |

All percentages herein are by weight.   Some examples will now be given.

### Example 1

A series of alloy heats were prepared and were drawn to wire.   The compositions are set out in Table I in which the wires numbered 1 to 6 are within the invention, A is a nickel iron alloy containing approximately 55% nickel and B is NILO alloy 36 (NILO is a registered Trade Mark).

TABLE I

| Wire Designation | C | Mn | Fe | S | Si | Cu | Ni | Al | Ti | Ca | P |
|---|---|---|---|---|---|---|---|---|---|---|---|
| 1 | .23 | 4.93 | 52.31 | .003 | .08 | <.01 | 42.17 | .16 | .08 | .015 | .003 |
| 2 | .25 | 7.15 | 47.92 | .003 | .07 | 2.0 | 42.30 | .17 | .10 | .018 | .001 |
| 3 | .28 | 7.11 | 50.08 | .003 | .07 | .02 | 42.16 | .15 | .09 | .016 | <.001 |
| 4 | .25 | 9.02 | 48.18 | .004 | .07 | <.01 | 42.21 | .15 | .08 | .015 | .001 |
| 5 | .26 | 11.06 | 46.19 | .004 | .07 | <.01 | 42.15 | .14 | .09 | .019 | <.001 |
| 6 | .27 | 13.09 | 44.11 | .005 | .07 | <.01 | 42.18 | .15 | .09 | .017 | <.001 |
| A | .07 | .33 | 44.04 | .002 | .15 | .14 | 55.27 | – | – | – | – |
| B | .07 | 2.40 | Bal | .006 | .02 | – | 36.25 | – | .75 | – | – |

- 3 -

A series of welding exercises were carried out. Firstly the surfaces of ductile iron plates were ground. Beads were made on the ductile iron plate using the GMAW process. It was noted that beads made with the wires of the invention exhibited less surface oxide and flowed better than those made from the Ni-Fe alloy A. In a second series of tests carbon dioxide and argon were used to evaluate the butt welding of ductile iron. The resulting welds were compared to those from alloys A and B. Using liquid penetrant techniques it was determined that alloy A cracked and alloy B exhibited a few cracks. Alloys of the invention displayed good cracking resistance. Results are given in Tables II. Welding tests were also carried out to compare performance in butt welding ductile iron to itself and to a steel. Results are given in Table III.

## TABLE II

### Welding tests on Ductile Iron

| Wire Designation | Gas | Direction | TS MN/m² | El % | RA % | Hardness R6 | Comments |
|---|---|---|---|---|---|---|---|
| 1 | $CO_2$ | L | 508 | 13 | 12.9 | 92/93 | Cracks in gauge length |
| 1 | Argon | L | 692 | 28 | 30.3 | 93/95 | Good fracture |
| | | T | 243 | 1.4 | 2.9 | 76 | Failure W, HAZ, B |
| | | T | 427 | 3.5 | 1.4 | 71/73 | W, HAZ, B |
| 2 | Argon | T | 404 | 3.5 | 6.3 | 76/78 | HAZ, B |
| | | T | 385 | 1.4 | – | 81/84 | W, HAZ, B |
| | | L | 661 | 19 | 25.4 | 92 | Good fracture |
| 2 | $CO_2$ | L | 690 | 32 | 29.9 | 90/95 | Good fracture |
| 3 | Argon | L | 694 | 26 | 36.3 | 94/95 | Good fracture |
| 4 | Argon | L | 739 | 36 | 35.1 | 93/94 | Good fracture |
| 6 | Argon | L | 738 | 24 | 31.5 | 94/97 | Cracks along gauge |
| 6 | $CO_2$ | L | 744 | 36 | 33.8 | 97 | Good fracture |
| 6 | | L | 700 | 28 | 29.8 | 96/98 | Good fracture high amps and voltage |
| A | $CO_2$ | – | Cracked badly | | | | |
| A | Argon | – | Cracked badly | | | | |
| B | Argon | L | 755 | 19 | 21.9 | 99/100 | Cracks in gauge length |

Legend  W = Weld          HAZ = Heat Affected Zone
        B = Base Metal      T = Transverse
        L = Longitudinal

- 5 -

TABLE III

Tensile Properties

| Wire Designation | Base | YS (MN/m²) | TS (MN/m²) | EL% | RA% | Direction | Comments |
|---|---|---|---|---|---|---|---|
| 2 | D1-D1 | 418 | 685 | 30 | 32.9 | L | |
| | | 441 | 712 | 35 | 36.1 | L | |
| 2 | D1-Steel | – | 427 | 21.5 | 53.3 | T | Failed steel |
| | | – | 428 | 24.5 | 53.6 | T | Failed steel |
| | | 340 | 569 | 35 | 51.8 | L | |
| 3 | D1-D1 | 369 | 638 | 40 | 52.9 | L | DCRP |
| | | 345 | 452 | 4.2 | 7.4 | T | Failed HAZ, bad |
| 3 | D1-D1 | 418 | 691 | 36.0 | 34.7 | L | |
| | | 412 | 703 | 35.0 | 40.2 | L | |
| 3 | D1-Steel | 372 | 623 | 39.0 | 45.8 | L | |
| | | 313 | 434 | NA | 50.7 | T | Failed steel |
| 4 | D1-D1 | NA | 535 | 14 | 24.7 | L | Cracks in gauge |
| | | NA | 463 | 8 | 22.6 | T | |
| 4 | D1-Steel | NA | 620 | 37 | 48.6 | L | |
| | | NA | 451 | 6.4 | 6 | T | |
| 5 | D1-D1 | NA | 558 | 25 | 34.4 | L | |
| | | NA | 441 | 4.2 | 1.8 | T | |
| 5 | D1-Steel | NA | 660 | 41 | 51.2 | L | |
| | | NA | 450 | – | 23.7 | T | |
| | | NA | 465 | – | 5 | T | |
| 6 | D1-D1 | NA | 698 | 44 | 51.7 | L | |
| 6 | D1-Steel | NA | 627 | 39 | 41 | L | |
| | | NA | 449 | 11 | 49.8 | T | |

Legend  DI = Ductile Iron       DCRP = Direct Current Reverse Polarity
        HAZ = Heat Affected Zone      L = Longitudinal          T = Transverse

## Example 2

By way of comparison six further heats were melted and drawn to wire. Their compositions were as follows:-

| Designation | Fe | Mn | Si | Al | Ti | Ca | Ni | C |
|---|---|---|---|---|---|---|---|---|
| C | Bal | 2.88 | .23 | .06 | .15 | .030 | 50.47 | .15 |
| D | " | 3.96 | .24 | .14 | .20 | .027 | 50.22 | .26 |
| E | " | 4.13 | .28 | .11 | .19 | .022 | 45.20 | .27 |
| F | " | 3.87 | .26 | .12 | .15 | .016 | 45.53 | .24 |
| G | " | 0.64 | .15 | .32 | .24 | - | 55.75 | .05 |
| 7 | " | 5.05 | .26 | .13 | .18 | .023 | 50.06 | .28 |

The composition of wire G is that used commercially as the core wire for NI-ROD 55 coated electrode. A series of welded joints were made using the above wires as welding material using a ductile iron workpiece in the shape of a plate. Using liquid penetrated techniques it was discovered that welding wire 7, the only wire falling within the invention, having the highest manganese content had very little cracking in the weld material whereas the other welds had significant cracks.

Welding wires of the present invention will be seen from Example 1 to give good welding results with a minimum of cracking. The wires of the invention have economic advantages over prior art welding wires for use in the welding of ductile iron, for example they contain far less nickel.

## Claims

1.     A welding wire for use in welding cast iron or nickel-iron alloys consisting of up to 0.3% carbon, 4.9 to 15% manganese, 36 to 60% nickel, up to 1% silicon, up to 4% copper, the balance, apart from impurities, being iron in the range 36% to 60%.

2.     A welding wire as claimed in claim 1 consisting of 0.1 to 0.3% carbon, 7 to 12% manganese, up to 0.2% silicon,   41 to 44% nickel the balance apart from impurities being iron.

3.     A welding wire as claimed in claim 1 or claim 2 having the nominal composition 0.3% carbon, 11.4% manganese, 0.11% silicon, 41.2% nickel balance apart from impurities being iron.

4.     A method of welding cast iron alloys to themselves or to other metals and alloys characterised in that a welding wire is used consisting of up to 0.3% carbon, 4.9 to 15% manganese, 36 to 60% nickel, up to 1% silicon, up to 4% copper, the balance apart from impurities being iron in the range 36% to 60%.

5.     A method of welding nickel-iron alloys to themselves or to other metals and alloys characterised in that a welding wire is used consisting of up to 0.3% carbon, 4.9 to 15% manganese, 36 to 60% nickel, up to 1% silicon, up to 4% copper, the balance apart from impurities being iron in the range 36 to 60%.

6.     A method as claimed in claim 4 or claim 5 in which the welding wire consists of 0.1 to 0.3% carbon, 7 to 12% manganese, 41 to 44% nickel, up to 0.2% silicon, the balance apart from impurities being iron.

European Patent Office

**EUROPEAN SEARCH REPORT**

## DOCUMENTS CONSIDERED TO BE RELEVANT

EP 84301912.6

| Category | Citation of document with indication, where appropriate, of relevant passages | Relevant to claim | CLASSIFICATION OF THE APPLICATION (Int. Cl. 3) |
|---|---|---|---|
| X | <u>GB - A - 1 296 538</u> ((YAWATA IRON & STEEL CO. LTD.)<br><br>* Tables 4-7: claims 1,2; especially lines 19,20 * | 1-3 | B 23 K 35/30<br><br>B 23 K 9/00<br><br>B 23 K 9/16<br><br>B 23 K 9/18 |
| X | <u>GB - A - 1 277 146</u> (TSENTRALNY NAUCHNO-ISSLEDOVATELSKY INSTITUT TEKHNOLOGII MASHINOSTROENIA)<br><br>* Examples; claims * | 1-3 | |
| X | <u>US - A - 4 087 673</u> (M. KIILUNEN)<br><br>* Claims * | 1-6 | |
| Y | <u>WO - A1 - 81/00 820</u> (RESEARCH CORPORATION)<br><br>* Table I; claims * | 1-6 | **TECHNICAL FIELDS SEARCHED (Int. Cl. 3)**<br><br>B 23 K |
| Y | <u>DE - B2 - 2 434 122</u> (INSTITUT ELEKTROSWARKI IMENI E.O. PATONA AKADEMII NAUK, UKRAINSKOJ SSR)<br><br>* Claim 1 * | 1-3 | |

The present search report has been drawn up for all claims

| Place of search | Date of completion of the search | Examiner |
|---|---|---|
| VIENNA | 29-05-1984 | SLAMA |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO Form 1503. 03.82